# FASCICULE DE BREVET EUROPEEN

(11) **EP 0 672 550 B1**
(45) Date de publication et mention de la délivrance du brevet: **04.02.1998**
(21) Numéro de dépôt: 95200602.1
(22) Date de dépôt: 13.03.1995
(51) Int. Cl.: B60H 1/24

(54) **Installation de climatisation de véhicule automobile**
Klimaanlage für Kraftfahrzeug
Air-conditioning installation for vehicle

(30) Priorité: 17.03.1994 FR 9402837
(43) Date de publication de la demande: 20.09.1995
(73) Titulaire: RENAULT, 92109 Boulogne-Billancourt (FR)
(72) Inventeur: Jouin, Guy, RENAULT SA - Service 60804, F-92500 Rueil Malmaison (FR)
(74) Mandataire: Ernst-Schonberg, Michel

(56) Documents cités:
- EP-A- 0 306 155
- DE-U- 1 929 373
- FR-A- 2 009 111
- US-A- 5 203 833
- PATENT ABSTRACTS OF JAPAN vol. 7 no. 199 (M-240) [1344] ,3 Septembre 1983 & JP-A-58 097510 (NIPPON DENSO) 10 Juin 1983,

## Description

L'invention concerne une installation de climatisation d'un habitacle de véhicule automobile dans laquelle des ouïes de distribution d'air sont portées par des caissons montés sur une paroi latérale de l'habitacle alimentée par une unité de refroidissement et de chauffage placée sous le siège avant du véhicule.

La publication US-A-2.696.774 décrit une installation de climatisation dans laquelle un ensemble de climatisation placé sous le siège du véhicule est alimenté par des conduits d'air formés à partir d'éléments de structure du véhicule.

La publication US-A-4.432.213 décrit une installation de climatisation dans laquelle le conditionneur d'air est accolé à une paroi latérale de l'habitacle à proximité des sièges du véhicule. Un tel conditionneur englobe les unités de ventilation, de refroidissement et de chauffage.

Lorsque l'installation doit distribuer l'air de refroidissement et de chauffage dans l'ensemble de l'habitacle d'un véhicule qui possède une pluralité de rangées de sièges et une porte latérale coulissante, la rangée de sièges accolée à une telle porte ne peut pas être localisée dans le flux d'air de climatisation distribué à partir de la paroi latérale du véhicule.

L'invention a ainsi pour objet une installation de climatisation de véhicule automobile, plus particulièrement équipé d'au moins trois rangées de sièges, réparties longitudinalement à l'intérieur de l'habitacle du véhicule et parmi lesquelles la rangée de sièges avant contient un siège de conducteur et un siège de passager tandisque la rangée médiane des sièges est accessible par une porte latérale coulissante.

L'invention a encore pour objet une installation de climatisation dans laquelle les moyens de diffusion d'air sont situés le long des parois latérales du véhicule, si bien que la surface de plancher peut être soit occupée intégralement par les sièges des passagers du véhicule soit constituer une surface de chargement.

Selon l'invention l'unité de refroidissement est localisée dans une traverse support du siège et possède un ensemble ventilateur qui force l'air de refroidissement dans des caissons de dérivation dont les extrémités débouchent dans ladite traverse support et qui possèdent une extension longitudinale porteuse des ouïes de distribution d'air dans l'habitacle.

D'autres caractéristiques et avantages de l'invention apparaîtront à la lecture de la description d'un exemple de réalisation de l'installation en référence au dessin annexé dans lequel :
- la figure 1 est une représentation schématique vue en plan d'un véhicule équipé de l'installation conforme à l'invention,
- la figure 2 est une vue en élévation du véhicule représenté à la figure 1 avec arrachement partiel de la paroi latérale côté passager,
- la figure 3 est une vue en élévation du véhicule représenté à la figure 1, avec arrachement partiel de la paroi latérale côté conducteur,
- la figure 4 est une représentation du circuit de fluide caloporteur et des organes de l'installation de climatisation.

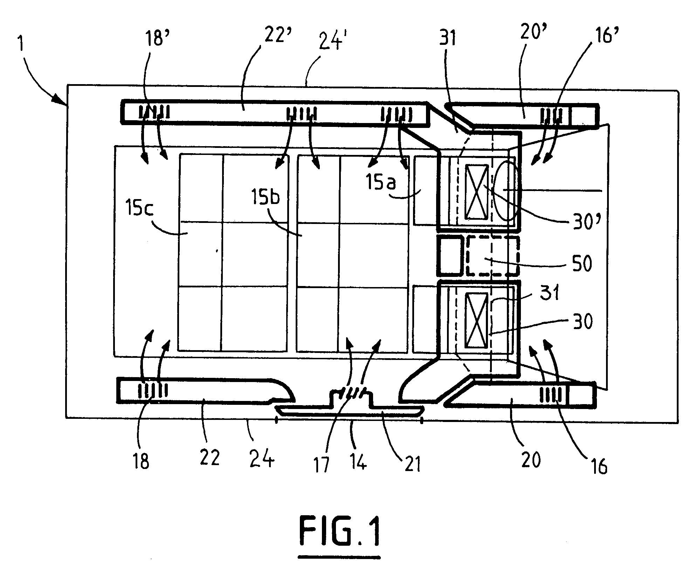

Le véhicule représenté aux figures 1 à 3 est constitué par une carrosserie 1, supportée par un châssis plancher 10.

La carrosserie possède essentiellement un pavillon 11, un pare-brise 12 et une ouverture latérale 13 recevant une porte coulissante 14.

Le plancher 10 supporte au moins trois rangées de sièges 15a, 15b, 15c réparties longitudinalement à l'intérieur de l'habitacle.

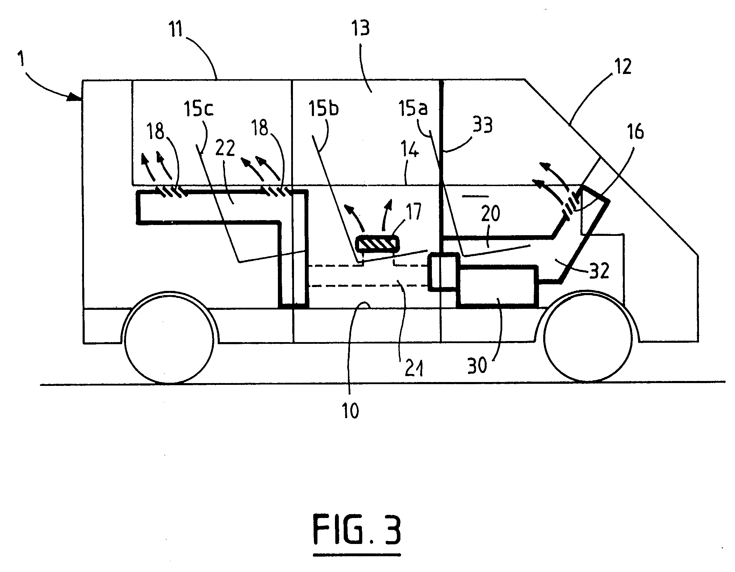

Des ouïes 16, 17, 18 de distributions latérales de l'air de refroidissement ou de chauffage sont réparties dans les extensions longitudinales des caissons de dérivation incluant un caisson avant 20, un caisson 21 de la porte 14 et un caisson arrière 22 montés sur une paroi latérale 24 de l'habitacle comme représenté aux figures 1 et 3.

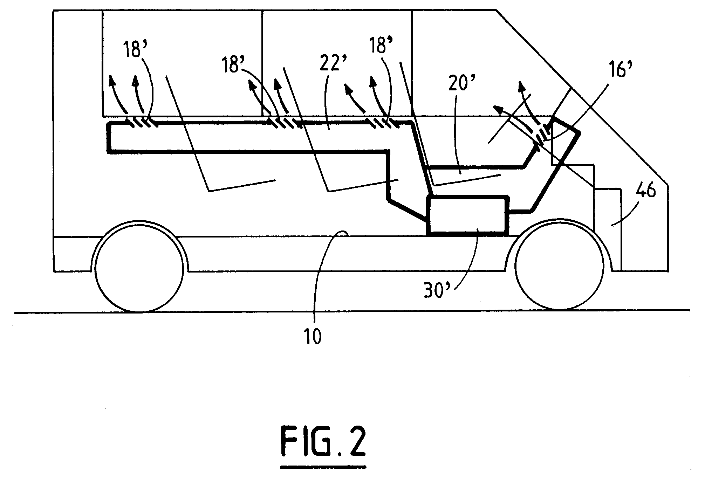

Des ouïes 16', 18' de distribution d'air sont réparties de même sur l'extension longitudinale d'un caisson creux de dérivation d'air incluant un caisson avant 20' et un caisson arrière 22' montés sur l'autre paroi latérale 24' de l'habitacle comme représenté aux figures 1 et 2.

Ainsi que cela est représenté à la figure 1, des unités de refroidissement 30, 30' sont placées dans une traverse 31 support du siège du conducteur et du siège de passager de la rangée de sièges 15a. La traverse 31 débouche dans les caissons avant 20, 20' qui constituent des conduits d'air tels que le conduit 32 localisé le long du montant latéral 33 adjacent à la porte coulissante 14. La porte 14 possède également un caisson 21 dont les zones de raccordement latérales sont respectivement accolées aux caissons avant 20 et arrière 22.

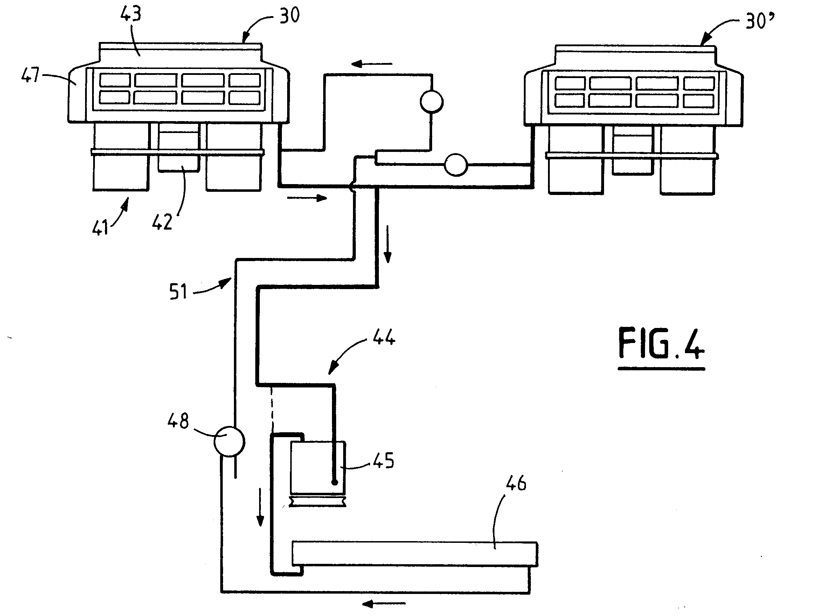

Chaque unité de refroidissement telle que 30, 30' est constituée par un motoventilateur 41, un évaporateur 43 et un circuit de fluide 44 représenté plus en détail à la figure 4. Sur le dessin on voit que chaque unité de refroidissement telle que 30, 30' possède un motoventilateur radial 41 à deux turbines entraînées par un moteur électrique 42. Un évaporateur 43 est directement traversé par l'air débité par le motoventilateur 41. L'unité de refroidissement porte par ailleurs les raccords de canalisations du circuit de fluide caloporteur 44.

Le circuit de fluide 44 possède quatre organes principaux. D'une part un compresseur 45 et un condenseur 46 liquéfient le fluide caloporteur et d'autre part un détendeur 47 et l'évaporateur 43 transmettent à l'air débité par le motoventilateur 41, la fraîcheur souhaitée dans l'habitacle.

L'ensemble des organes est de la sorte localisé dans le compartiment moteur à l'exception de l'évaporateur 43 et du détendeur 47 qui sont intégrés dans l'unité du groupe motoventilateur 41. La partie 51 du circuit qui relie l'évaporateur 43 au compresseur 45 et la partie 52 du circuit qui relie le compresseur 45 à l'évaporateur 43 en passant par le condenseur 46, et une réserve de gaz 48 réalisent conjointement une source froide qui rafraîchit l'air par l'évaporateur 43 avant qu'il ne soit distribué dans l'habitacle.

La rangée des sièges 15a qui porte le siège du conducteur et celui du passager contient par ailleurs une chambre de conservation notamment de boissons, formée dans un boîtier de réfrigération 50 placé dans le flux d'air froid issu de l'évaporateur 43.

Selon une caractéristique de l'installation il est possible de faire circuler le fluide caloporteur en shuntant le compresseur 45. Cette mesure constructive autorise la circulation de l'air sans refroidissement préalable et l'alimentation directe de l'ensemble des ouies de distribution 16, 17, 18, 16', 18' en air chaud à partir des unités 30, 30'.

Le condenseur 46 peut être associé à un condenseur complémentaire et les deux condenseurs sont avantageusement placés derrière le pare-choc et dans le passage de roue pour recevoir le flux d'air aérodynamique au cours de l'avancement du véhicule.

Selon une autre caractéristique de l'invention les caissons tels que 20, 21, 22 et 20', 22' sont intégrés à des panneaux de garnissage de l'habitacle dont la partie supérieure constitue avantageusement un accoudoir.

## Revendications

1. Installation de climatisation d'un véhicule automobile équipé d'au moins trois rangées de sièges, réparties longitudinalement à l'intérieur d'un habitacle dans lequel des ouïes de distribution d'air (16, 17, 18 et 16', 18') sont portées par des caissons (20, 21, 22 et 20', 22') montés sur une paroi latérale de l'habitacle alimentés par une unité de refroidissement (30, 30') placée sous le siège avant du véhicule, caractérisée par le fait que l'unité de refroidissement (30, 30') est localisée dans une traverse (31) support du siège et possède un ensemble ventilateur (41) qui force l'air de refroidissement dans les caissons (20, 21, 22 et 20', 22') de dérivation dont les extrémités débouchent dans la traverse (31) et qui possèdent une extension longitudinale porteuse des ouïes de distribution (16, 17, 18, 16', 18') d'air.

2. Installation selon la revendication 1, caractérisée par le fait qu'une extrémité de la traverse débouche dans un caisson avant (20, 20') qui contient un conduit d'air (32) localisé le long d'un montant latéral (33) de la carrosserie adjacent à une porte coulissante (14) sur laquelle un caisson de porte (21) possède des zones de raccordement latérales respectivement accolées audit caisson avant (20) et à un caisson arrière (21).

3. Installation selon la revendication 2, caractérisée par le fait que les caissons de distribution d'air sont intégrés à des panneaux de garnissage de l'habitacle.

4. Installation selon l'une quelconque des revendications 1 à 3, caractérisée par le fait que l'unité de refroidissement porte les raccords de canalisations d'un circuit de fluide caloporteur dans lequel un condenseur (46) reçoit le flux d'air aérodynamique et est placé dans un circuit de refroidissement comportant un détendeur (47) et un compresseur (45) d'alimentation de l'unité de refroidissement (30').

5. Installation selon la revendication 1, caractérisée par le fait que la rangée de sièges (15a) qui porte le siège du conducteur contient une chambre de conservation formée dans un boîtier de réfrigération (50) placé dans le flux d'air issu de l'évaporateur (43) de l'unité de refroidissement (30, 30').

## Claims

1. An installation for air conditioning a motor vehicle fitted with at least three rows of seats distributed longitudinally in the interior of a passenger compartment in which air distribution outlets (16, 17, 18 and 16', 18') are carried by casings (20, 21, 22 and 20', 22') mounted on a side wall of the passenger compartment and fed by a cooling unit (30, 30') placed beneath the front seat of the vehicle, characterised in that the cooling unit (30, 30') is positioned in a support transverse portion (31) of the seat and has a fan assembly (41) which forces the cooling air into the discharge casings (20, 21, 22 and 20', 22') whose ends communicate with the transverse portion (31) and which have a longitudinal extension carrying the air distribution outlets (16, 17, 18, 16', 18').

2. An installation according to claim 1 characterised in that an end of the transverse portion communicates with a front casing (20, 20') which contains an air conduit (32) positioned along a lateral upright (33) of the bodywork adjacent to a sliding door (14) on which a door casing (21) has lateral connecting zones which are respectively coupled to said front casing (20) and to a rear casing (21).

3. An installation according to claim 2 characterised in that the air distribution casings are integrated in trim panels, of the passenger compartment.

4. An installation according to any one of claims 1 to 3 characterised in that the cooling unit carries the connections of conduits of a heat exchange fluid circuit in which a condenser (46) receives the aerodyanmic air flow and is disposed in a cooling circuit comprising an expansion unit (47) and a feed compressor (45) of the cooling unit (30').

5. An installation according to claim 1 characterised in that the row of seats (15a) which includes the driving seat contains a preservation chamber formed in a refrigerating case (50) disposed in the flow of air issuing from the evaporator (43) of the cooling unit (30, 30').

## Patentansprüche

1. Klimaanlage für ein Kraftfahrzeug, das mit mindestens drei Sitzreihen ausgestattet ist, die in Längsrichtung im Innern eines Karosseriegehäuses verteilt sind, in dem Luftverteilungsschlitze (16, 17, 18 und 16', 18') von Kammern (20, 21, 22 und 20', 22') getragen werden, die auf einer Seitenwand des Karosseriegehäuses montiert sind und von einer Kühleinheit (30, 30') gespeist werden, die sich unter dem Vordersitz des Fahrzeugs befindet, dadurch gekennzeichnet, daß die Kühleinheit (30, 30') in einem Querträger (31) des Sitzes angeordnet ist und einen Lüftersatz (41) besitzt, der die Kühlluft in die Abzweigkammern (20, 21, 22 und 20', 22') treibt, deren Enden in den Querträger (31) münden und die eine längsgerichtete Verlängerung aufweisen, welche die Luftverteilungsschlitze (16, 17, 18, 16', 18') trägt.

2. Anlage nach Anspruch 1, dadurch gekennzeichnet, daß ein Ende des Querträgers in eine vordere Kammer (20, 20') mündet, die einen Luftkanal (32) enthält, der längs eines seitlichen Pfostens (33) der Karosserie angeordnet ist, welcher an eine Schiebetür (14) angrenzt, auf der eine Türkammer (21) seitliche Anschlußzonen aufweist, die jeweils an die vordere (20) und an eine hintere Kammer (22) angefügt sind.

3. Anlage nach Anspruch 2, dadurch gekennzeichnet, daß die Luftverteilungskammern in Verkleidungsplatten des Karosseriegehäuses integriert sind.

4. Anlage nach einem der Ansprüche 1 bis 3, dadurch gekennzeichnet, daß die Kühleinheit die Leitungsanschlüsse eines Kühlmittelkreislaufs trägt, in dem ein Kondensator (46) den aerodynamischen Luftstrom empfängt und in einem Kühlkreislauf angeordnet ist, der ein Expansionsventil (47) und einen Kompressor (45) zur Speisung der Kühleinheit (30') aufweist.

5. Anlage nach Anspruch 1, dadurch gekennzeichnet, daß die Sitzreihe (15a), die den Sitz des Fahrers trägt, eine Aufbewahrungskammer enthält, die in einem Kühlkasten (50) ausgebildet ist, der in dem von dem Verdampfer (43) der Kühleinheit (30, 30') kommenden Luftstrom angeordnet ist.
